# EUROPÄISCHE PATENTSCHRIFT

(11) **EP 3 049 264 B1**
(45) Veröffentlichungstag und Bekanntmachung des Hinweises auf die Patenterteilung: **06.05.2020**
(21) Anmeldenummer: 14750510.1
(22) Anmeldetag: 13.08.2014
(51) Int. Cl.: B60H 1/32, B60H 1/00

(54) **KÜHLSYSTEM FÜR KRAFTFAHRZEUGE UND VERFAHREN ZUR NUTZUNG EINES AN EINEM AGGREGAT EINES FAHRZEUGS ENTSTEHENDEN KONDENSWASSERS**
COOLING SYSTEM FOR MOTOR VEHICLES AND METHOD FOR USING CONDENSATION WATER PRODUCED ON A UNIT OF A MOTOR VEHICLE
SYSTÈME DE REFROIDISSEMENT POUR VÉHICULES À MOTEUR ET PROCÉDÉ D'UTILISATION D'EAU DE CONDENSATION PRODUITE SUR UN ORGANE D'UN VÉHICULE

(30) Priorität: 24.09.2013 DE 102013110561
(43) Veröffentlichungstag der Anmeldung: 03.08.2016
(73) Patentinhaber: Pierburg GmbH, 41460 Neuss (DE)
(72) Erfinder: HOPP, Martin, 50858 Köln (DE); NAUSE, Fabienne, 74196 Neuenstadt am Kocher (DE); KÖHLER, Matthias, 74177 Bad Friedrichshall (DE)
(74) Vertreter: terpatent Patentanwälte ter Smitten Eberlein-Van Hoof Rütten Daubert
(86) Internationale Anmeldenummer: PCT/EP2014/067351
(87) Internationale Veröffentlichungsnummer: WO 2015/043822

(56) Entgegenhaltungen:
- EP-A1- 1 316 450
- WO-A1-2012/063095
- DE-A1-102004 012 871
- US-A1- 2002 020 185
- US-A1- 2010 180 610

## Beschreibung

Die Erfindung betrifft ein Kühlsystem für Kraftfahrzeuge zur Kühlung eines Fahrzeuginnenraums und/oder eines Fahrzeugaggregats mit zumindest einem Auffangbehälter zum Auffangen von an einem Aggregat, insbesondere einem Verdampfer, entstehendem Kondenswasser, einer Ablaufleitung zum Leiten des aufgefangenen Kondenswassers und einem von dem Kondenswasser durchströmbaren Wärmetauscher. Ferner betrifft die Erfindung ein Verfahren zur Nutzung eines an einem Aggregat eines Fahrzeuges, insbesondere einem Verdampfer, entstehenden Kondenswassers.

Die DE 37 06 546 C1 beschreibt eine Auffangschale zum Auffangen von Kondenswasser eines Verdampfers, das zur Kühlung von bestimmten Bauteilen eines Fahrzeugs verwendet werden kann. Die zu kühlenden Bauteile sind entweder innerhalb der Auffangschale angeordnet, so dass das Kondenswasser die Bauteile direkt umgibt, oder das Kondenswasser ist den zu kühlenden Bauteilen zugeführt und überströmt diese an einer Außenseite.

Die DE 10 2008 048 016 A1 beschreibt ein Auffangen, Speichern und Verwenden des Kondenswassers zur Kühlung eines Kältemittel-Kreislaufs, Dazu wird das Kondenswasser zu einem Wärmetauscher des Kältemittel-Kreislaufs geleitet. Eine solche Ausgestaltung ist auch aus der WO 2012/063095 A1 bekannt, bei der ein Kondenswasser in einen luftüberströmten Kondenswasser-Kältemittel-Wärmetauscher geführt ist.

Die DE 10 2011 005 595 A1 beschreibt ebenfalls ein Auffangen und Nutzen des Kondenswassers einer Klimaanlage eines Fahrzeuges zur Kühlung eines Verbrennungsmotors. Das durch die Kühlung erhitzte Kondenswasser wird einem Ansaugsystem des Verbrennungsmotors zugeführt oder an die Umgebung abgelassen.

Nachteilig an den bekannten Systemen ist, dass dem Kühlsystem zur Kühlung eines Fahrzeuginnenraums ein Teil der Kühlleistung in Form des entstehenden Kondenswassers entzogen bzw. abgeführt wird und diese abgeführte Kühlleistung nicht wieder zur Kühlung des Fahrzeuginnenraums, sondern für andere Kühlzwecke genutzt wird. Dadurch reduziert sich jedoch der Kühleffekt zur Kühlung des Fahrzeuginnenraums.

Der Erfindung liegt daher die Aufgabe zugrunde, ein Kühlsystem für Kraftfahrzeuge bereitzustellen, dass eine besonders schnelle und effektive Kühlung des Fahrzeuginnenraums ermöglicht. Ferner soll ein Verfahren bereitgestellt werden, mit dem ein solches Kühlsystem betrieben werden kann.

Die Lösung der Aufgabe erfolgt erfindungsgemäß durch ein Kühlsystem mit den Merkmalen des Anspruchs 1 sowie durch ein Verfahren mit den Merkmalen des Anspruchs 13.

In bekannter Weise umfasst das Kühlsystem einen Auffangbehälter zum Auffangen von durch Betrieb eines Aggregats entstehendem Kondenswasser. Unter einem Aggregat sind vorliegend nicht nur sämtliche Aggregate eines Fahrzeuges sondern auch einzelne Teile oder Komponenten eines Aggregats oder Systems zu verstehen, So kann das Aggregat beispielsweise ein Wärmetauscher einer Klimaanlage oder eines Heiz-/Kühlsystems sein, an dem Kondenswasser entsteht. Zum Auffangen des Kondenswassers ist der Auffangbehälter unterhalb des Aggregats angeordnet, so dass das Kondenswasser mittels der Schwerkraft an dem Aggregat herunterfließen und in den Behälter hinein tropfen oder fließen kann. Der Behälter kann als eine Schale oder eine Wanne ausgebildet sein. An einer Unterseite des Behälters ist ein Ablauf in eine Ablaufleitung abgeordnet, so dass das Kondenswasser weitergeleitet werden kann. Das Kondenswasser wird zu einem Wärmetauscher weitergeleitet, in dem das Kondenswasser zu Kühlzwecken Wärme aufnehmen kann.

Erfindungsgemäß ist der Wärmetauscher als ein Luft-Wasser-Wärmetauscher ausgebildet, der zum Einen von dem Kondenswasser und zum Anderen von Luft über- und/oder durchströmbar ist. Dadurch kann das kalte Kondenswasser bei Durchströmen des Luft-Wasser-Wärmetauschers Wärme von einem Luftstrom aufnehmen, so dass der Luftstrom abgekühlt wird. Der Luftstrom kann den Luft-Wasser-Wärmetauscher an einer Außenseite überströmen und/oder mittels eines Rohrsystems durch den Luft-Wasser-Wärmetauscher geführt sein.

Vorzugsweise wird der Luft-Wasser-Wärmetauscher von einem Zuluftstrom in den Fahrzeuginnenraum über- bzw. durchströmt. Die Kälteleistung des Kondenswassers kann somit optimal zur Kühlung eines Fahrzeuginnenraums und/oder einer Fahrzeuginnenraumkomponente genutzt werden. Dadurch kann die an einem Aggregat, insbesondere ein Aggregat des Kühlsystems, abgegebene Kühlleistung dem ursprünglichen Zweck, nämlich der Kühlung des Fahrzeuginnenraums wieder zur Verfügung gestellt bzw. zurückgeführt werden. Durch diese Art der Wärme- bzw. Kälterückgewinnung wird die Kühlwirkung des Kühlsystems verstärkt und das Kühlsystem besonders effektiv. Unter dem Fahrzeuginnenraum ist insbesondere der Passagierraum, unter der Fahrzeuginnenraumkomponente ein Gegenstand innerhalb des Fahrzeuginnenraums, beispielsweise ein Passagiersitz oder ein Lenkrad, zu verstehen. Die in den Fahrzeuginnenraum zugeführte Luft kann Frischluft, Umluft oder Mischluft sein, die in dem Luft-Wasser-Wärmetauscher gekühlt wird. Die Umluft betrifft dabei eine reine Kreisschaltung der Fahrzeuginnenraumluft, der Mischbetrieb einen Mix aus Umluft und Frischluft. Alternativ kann auch ein aus dem Fahrzeuginnenraum herausgeführter Abluftstrom den Luft-Wasser-Wärmetauscher über- bzw. durchströmen, so dass der Abluftstrom in dem Luft-Wasser-Wärmetauscher abgekühlt wird. Der Abluftstrom kann sodann als Umluftstrom dem Fahrzeuginnenrau wieder zugeführt sein oder auch zur Kühlung einer anderen Fahrzeugkomponente bereitgestellt werden.

Vorzugsweise ist der Luft-Wasser-Wärmetauscher in einem Luftstrom einem Klimagerät vorgelagert. Dadurch kann ein Luftstrom in dem Luft-Wasser-Wärmetauscher zunächst vorgekühlt werden und anschließend in dem Klimagerät vollständig abgekühlt werden. Dadurch wird eine besonders effektive Kühlung des Luftstroms bewirkt.

In einer Ausgestaltung ist der Luft-Wasser-Wärmetauscher innerhalb des Fahrzeuginnenraums angeordnet. Dadurch kann die Fahrzeuginnenraumluft bei Überströmen des Luft-Wasser-Wärmetauschers unmittelbar gekühlt werden. Beispielsweise ist der Luft-Wasser-Wärmetauscher als ein flaches Bauteil in dem Fahrzeughimmel bzw. Innenraumdach oder dem Innenraumboden angeordnet.

Der Luft-Wasser-Wärmetauscher kann in einer Fahrzeuginnenraumkomponente angeordnet sein, insbesondere in einem Lenkrad oder einem Passagiersitz. Dadurch kann eine durch den Passagier unmittelbar fühlbare Kühlung der Fahrzeuginnenraumkomponente bewirkt werden. Beispielsweise kann ein durch Sonneneinfluss stark erhitztes Lenkrad durch einen durch das Lenkrad geleiteten Kondenswasserstrom abgekühlt werden. Darüber hinaus können Sitze, Armlehnen oder auch Seitenwände mittels der Anordnung des Luft-Wasser-Wärmetauschers gekühlt werden. Ferner kann der Luft-Wasser-Wärmetauscher vollständig als eine solche Fahrzeuginnenraumkomponente aufgebaut sein, beispielsweise als ein Handschuhfach, das an den Seitenwänden Röhrchen aufweist, die zur Kühlung von dem Kondenswasser durchströmt werden. Ein weiteres Beispiel dieser Aufbauart ist ein von dem Kondenswasser gekühlter Getränkehalter.

Der Luft-Wasser-Wärmetauscher ist vorzugsweise umgehbar angeordnet, so dass das Kondenswasser an dem Luft-Wasser-Wärmetauscher vorbei geleitet werden kann, ohne Wärme aufzunehmen. Dies ist insbesondere bei einer nicht-gewünschten Rückführung der Kühlleistung bzw. nicht-gewünschten weiteren Kühlung des Fahrzeuginnenraums bzw. der Fahrzeuginnenraumkomponente vorteilhaft. Ferner kann bei einem sehr starken Kondenswasserstrom das Kondenswasser schnell abgeleitet werden, ohne den Luft-Wasser-Wärmetauscher durchströmen zu müssen.

Vorzugsweise weist das Kühlsystem einen Speicher zum Speichern des Kondenswassers auf. Der Speicher kann als separater Speicher zwischen dem Ablauf des Auffangbehälters und dem Luft-Wasser-Wärmetauscher angeordnet sein oder auch der Auffangbehälter selbst sein. Vorzugsweise ist der Speicher bezüglich des Kondenswasserstroms stromaufwärts des Luft-Wasser-Wärmetauschers angeordnet. Dadurch kann das Kondenswasser bedarfsgerecht in den Luft-Wasser-Wärmetauscher geleitet werden. Der Speicher kann als einfacher Wasserspeicher oder auch als ein thermischer Wasserspeicher aufgebaut sein, in dem die Temperatur des Kondenswassers für eine gewisse Zeit gehalten werden kann. Ferner kann der Speicher vollständig oder teilweise ein Wasserspeicher des Fahrzeugs oder einer Fahrzeugkomponente sein, beispielsweise der Scheibenwischanlage.

Der Speicher kann zum Einspeichern des Kondenswassers in den Speicher und/oder Ausspeichern des Kondenswassers aus dem Speicher bedarfsgerecht mit dem Kühlsystem verschaltet werden. Der Speicher kann insbesondere umgehbar sein. Dazu ist ein Steuerventil vorgesehen, das den Kondenswasserstrom zu dem Speicher oder zu dem Luft-Wasser-Wärmetauscher leitet. Dadurch kann der Speicher bis zu einem Maximum gefüllt werden und das weiter entstehende Kondenswasser an dem Speicher vorbei geleitet werden. Das in dem Speicher gespeicherte Kondenswasser kann mittels eines Ventils je nach Bedarf aus dem Speicher in den Luft-Wasser-Wärmetauscher geleitet werden.

Vorzugsweise kann der Speicher auch manuell mit Wasser gefüllt werden. Dazu weist der Speicher vorzugsweise einen Einfüllstutzten auf, über den der Speicher mit Wasser extern befüllbar ist. Dadurch kann eine Kühlung des Fahrzeuginnenraums und/oder der Fahrzeuginnenraumkomponente auch bei nicht entstehendem Kondenswasser sichergestellt werden.

Zum Leiten des an dem Aggregat entstehenden Kondenswassers kann das Aggregat beispielsweise an einer Außenseite Leitrippen aufweisen. Die Leitrippen sind in eine Richtung orientiert, so dass das Kondenswasser von einer Oberseite über eine Seitenwand bis zu einer Unterseite des Aggregats geleitet wird. Dadurch kann das Kondenswasser mittels der Schwerkraft zu der Unterseite geleitet werden, an der das Kondenswasser von dem Aggregat in den Auffangbehälter abtropfen kann.

Erfindungsgemäß ist in einem Verfahren zur Nutzung eines an einem Aggregat eines Fahrzeuges, insbesondere einem Verdampfer, entstehenden Kondenswassers vorgesehen, dass das Kondenswasser zur Kühlung eines Fahrzeuginnenraums und/oder einer Fahrzeuginnenraumkomponente genutzt wird. Insbesondere wird das Kondenswasser unter Nutzung der fühlbaren und/oder latenten Wärme des Kondenswassers zur Kühlung des Fahrzeuginnenraums und/oder einer Fahrzeuginnenraumkomponente genutzt. Dadurch kann die Kühlung eines Fahrzeuginnenraums mittels einer Klimaanlage effektiv unterstützt werden, so dass der Energieverbrauch des Fahrzeuges gemindert werden kann.

Das an dem Fahrzeugaggregat entstehende Kondenswasser kann in einem Auffangbehälter aufgefangen werden, insbesondere kann das Kondenswasser an einer Seitenwand des Aggregats aufgrund der Schwerkraft an die Unterseite des Aggregats geführt werden und dort in den Auffangbehälter hinein tropfen. Das Kondenswasser kann sodann über einen Ablauf in dem Auffangbehälter in einer Ablaufleitung weiter geleitet werden.

Das Kondenswasser wird zur Kühlung eines Luftstroms einem Luft-Wasser-Wärmetauscher zugeführt. Der Luft-Wasser-Wärmetauscher kann dabei von dem Luftstrom, insbesondere einem Zuluft in den Fahrzeuginnenraum, über- oder durchströmt werden. Dabei nimmt das durch den Luft-Wasser-Wärmetauscher strömende Kondenswasser Wärme von dem Luftstrom auf, so dass die Luft abgekühlt wird. Beispielsweise wird der Zuluftstrom zunächst in dem Luft-Wasser-Wärmetauscher vorgekühlt, in den sich anschließenden Klimagerät vollständig gekühlt und so dann in den Fahrzeuginnenraum geleitet.

In einer weiterführenden Ausgestaltung wird das Kondenswasser direkt in einen Luftstrom eingesprüht, insbesondere in einen Zuluftstrom in den Fahrzeuginnenraum. Dadurch kann ein Abkühlen des Luftstroms aufgrund einer Verdampfungswärme erfolgen. Das Einsprühen des Kondenswassers in den Luftstrom kann beispielsweise über feine Düsen erfolgen, insbesondere eine Pumpe-Düse-Kombination. Alternativ kann ein Ultraschallzerstäuber zum Einsprühen des Kondenswassers vorgesehen sein. Für eine weitere Kühlung kann der Luftstrom zusätzlich den Luft-Wasser-Wärmetauscher über- und/oder durchströmen. Das Kondenswasser kann auch in einen Abluftstrom eingesprüht werden. Dadurch kann der abgekühlte Abluftstrom dem Zuluftstrom wieder zugeführt werden oder mit dem Zuluftstrom in einen Wärmetausch gebracht werden. Die Zuluft kann dadurch vorgekühlt werden.

Vorzugsweise wird das Kondenswasser nach dem Ablauf aus dem Auffangbehälter in einen Speicher geleitet, in dem das Kondensat gesammelt und gespeichert werden kann. Dadurch kann das Kondenswasser bedarfsgerecht in den Luft-Wasser-Wärmetauscher geleitet werden. Vorzugsweise kann die Temperatur des Kondenswassers in dem Speicher für eine gewisse Zeit gehalten werden.

Nachfolgend wird die Erfindung anhand einer bevorzugten Ausführungsform unter Bezugnahme auf die anliegende Zeichnung näher erläutert.

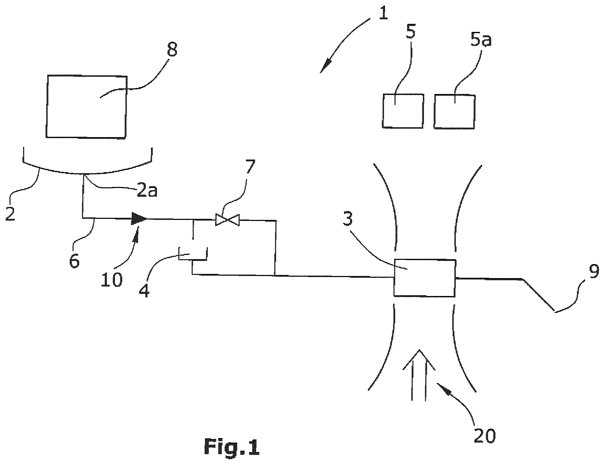

Hierbei zeigt die einzige Figur eine Anordnung des Kühlsystems, wobei die Einbindung in ein Fahrzeug zur Verdeutlichung der Funktionsweise schematisch dargestellt ist.

Das Kühlsystem 1 umfasst zumindest ein Fahrzeugaggregat 8, an dem aufgrund einer Temperaturdifferenz ein Kondenswasser 10 entsteht, eine Auffangschale 2 sowie einen Luft-Wasser-Wärmetauscher 3, der über eine Leitung 6 mit der Auffangschale 2 verbunden ist und von dem Kondenswasser 10 durchströmbar ist.

Das an dem Fahrzeugaggregat 8 entstehende Kondenswasser 10 wird in einem Auffangbehälter 2 aufgefangen. Der Auffangbehälter 2 ist unterhalb des Aggregats 8 angeordnet, so dass das Kondenswasser 10 an einer Außenwand des Aggregats 8 aufgrund der Schwerkraft zu der Unterseite des Aggregats 8 fließt und von dort in den Auffangbehälter 2 hinein tropft. Das Kondenswasser 10 wird sodann über einen Ablauf 2a der Auffangschale 2 in die Ablaufleitung 6 geleitet.

Das Kondenswasser 10 wird durch die Leitung 6 zu einem Speicher 4 geleitet, in dem das Kondenswasser 10 gespeichert werden kann. Bei Bedarf, das heißt, sobald eine Kühlung eines Luftstroms 20 erforderlich ist, wird das Kondenswasser 10 aus dem Speicher 4 in den Luft-Wasser-Wärmetauscher 3 geleitet. Alternativ kann das Kondenswasser 10 auch unmittelbar von dem Auffangbehälter 2 in den Luft-Wasser-Wärmetauscher 3 geleitet werden. Hierzu ist in der Leitung 6 ein Ventil 7 angeordnet, das den Kondenswasserstrom 10 zu dem Speicher 4 und/oder zu dem Luft-Wasser-Wärmetauscher 3 leitet.

Zur Kühlung des Luftstroms 20 wird der Luft-Wasser-Wärmetauscher 3 von dem Kondenswasser 10 durchströmt und von dem Luftstrom 20 überströmt. Dabei nimmt das durch den Luft-Wasser-Wärmetauscher 3 strömende Kondenswasser 10 Wärme von dem Luftstrom 20 auf, so dass die Luft 20 abgekühlt wird. Die abgekühlte Luft 20 wird sodann einem nicht näher dargestellten Fahrzeuginnenraum 5 zugeführt. Das erwärmte Kondenswasser 10 wird über einen Ablauf 9 an die Umgebung abgelassen,

Das dem Luft-Wasser-Wärmetauscher 3 zugeführte Kondenswasser 10 kann an einem beliebigen Aggregat 8 des Fahrzeuges entstehen. Das Aggregat 8 kann eine Funktionseinheit des Fahrzeuges, eines Fahrzeugmotors oder eines Heiz-/Kühlsystems des Fahrzeugs sein. Insbesondere ist das Aggregat 8 ein Verdampfer und/oder ein Luftkühler bekannter Bauart. Das Kondenswasser 10 wird bevorzugt an mehreren Aggregaten 8 eines Fahrzeuges abgeschöpft. Dadurch kann ein relativ großer Kondenswasserstrom 10 erreicht werden.

Zur Förderung des Kondenswassers 10 von dem Aggregat 8 zu dem Luft-Wasser-Wärmetauscher 3 kann die Leitung 6 eine Pumpe aufweisen. Vorzugsweise erfolgt die Förderung des Kondenswassers allein über die Schwerkraft bzw. über Sogeffekte.

Der Luft-Wasser-Wärmetauscher 3 kann an beliebiger Stelle in einem Fahrzeug angeordnet sein. So kann der Luft-Wasser-Wärmetauscher 3 innerhalb des Fahrzeuginnenraums 5 oder innerhalb einer Fahrzeuginnenraumkomponente 5a angeordnet sein. Ferner kann der Luft-Wasser-Wärmetauscher 3 in der Nähe des Luftauslasses in den Fahrzeuginnenraum 5 angeordnet sein, beispielsweise unmittelbar vor einem Klimagerät. Alternativ ist der Luft-Wasser-Wärmetauscher 3 in einem Luftkanal an einem Frontend des Fahrzeuges angeordnet.

## Patentansprüche

1. Kühlsystem (1) für Kraftfahrzeuge zur Kühlung eines Fahrzeuginnenraums (5) und/oder eines Fahrzeugaggregats (5a) mit zumindest einem Auffangbehälter (2) zum Auffangen von an einem Aggregat (8) entstehendem Kondenswasser (10), einer Ablaufleitung (6) zum Leiten des aufgefangenen Kondenswassers (10) und einem von dem Kondenswasser (10) durchströmbaren Wärmetauscher (3), **dadurch gekennzeichnet, dass** der Wärmetauscher (3) als ein Luft-Wasser-Wärmetauscher ausgebildet ist, in dem das Kondenswasser (10) Wärme von einem Luftstrom (20) aufnehmen kann.

2. Kühlsystem (1) nach Anspruch 1, **dadurch gekennzeichnet, dass** der Luft-Wasser-Wärmetauscher (3) von einem in den Fahrzeuginnenraum (5) geleiteten Luftstrom (20) über- und/oder durchströmbar ist.

3. Kühlsystem (1) nach einem der Ansprüche 1 oder 2, **dadurch gekennzeichnet, dass** der Luft-Wasser-Wärmetauscher (3) in dem Luftstrom (20) einem Klimagerät vorgelagert ist.

4. Kühlsystem (1) nach einem der voranstehenden Ansprüche, **dadurch gekennzeichnet, dass** der Luft-Wasser-Wärmetauscher (3) innerhalb des Fahrzeuginnenraums (5) angeordnet ist.

5. Kühlsystem (1) nach einem der voranstehenden Ansprüche, **dadurch gekennzeichnet, dass** der Luft-Wasser-Wärmetauscher (3) in einer Fahrzeuginnenraumkomponente angeordnet ist, insbesondere in einem Lenkrad oder einem Passagiersitz.

6. Kühlsystem (1) nach einem der voranstehenden Ansprüche, **dadurch gekennzeichnet, dass** der Luft-Wasser-Wärmetauscher (3) von dem Kondenswasser (10) umgehbar ist.

7. Kühlsystem (1) nach einem der voranstehenden Ansprüche, **dadurch gekennzeichnet, dass** das Kühlsystem (1) einen Speicher (4) zum Speichern des Kondenswassers (10) aufweist.

8. Kühlsystem (1) nach Anspruch 7, **dadurch gekennzeichnet, dass** der Speicher (4) dem Luft-Wasser-Wärmetauscher (3) vorgelagert ist.

9. Kühlsystem (1) nach einem der Ansprüche 7 oder 8, **dadurch gekennzeichnet, dass** der Speicher (4) von dem Kondenswasser (10) umgehbar ist.

10. Kühlsystem (1) nach einem der Ansprüche 7 bis 9, **dadurch gekennzeichnet, dass** der Speicher (4) von extern befüllbar ist.

11. Kühlsystem (1) nach einem der voranstehenden Ansprüche, **dadurch gekennzeichnet, dass** das Aggregat (8) zum Leiten des entstehenden Kondenswassers (10) zumindest eine Leitrippe aufweist.

12. Kühlsystem (1) nach einem der voranstehenden Ansprüche, **dadurch gekennzeichnet, dass** das Aggregat (8) ein Verdampfer und/oder Luftkühler ist.

13. Verfahren zur Nutzung eines an einem Aggregat (8) eines Fahrzeuges entstehenden Kondenswassers (10), **dadurch gekennzeichnet, dass** das Kondenswasser (10) zur Kühlung eines Fahrzeuginnenraums (5) und/oder einer FahrzeuginnenraumKomponente (5a) an dem Aggregat (8) in einem Auffangbehälter (2) aufgefangen wird und das aufgefangene Kondenswasser (10) einem Luft-Wasser-Wärmetauscher (3) zugeführt wird.

14. Verfahren nach Anspruch 13, **dadurch gekennzeichnet, dass** das Kondenswasser (10) in einen Luftstrom (20) eingesprüht wird.

15. Verfahren nach einem der Ansprüche 13 oder 14, **dadurch gekennzeichnet, dass** das Kondenswasser (10) einem Speicher (4) zugeführt wird, in dem das Kondenswasser (10) gesammelt und/oder gespeichert werden kann.

## Claims

1. Cooling system (1) for motor vehicles intended for cooling a vehicle interior (5) and/or a vehicle aggregate (5a), comprising at least one collecting container (2) for collecting condensed water (10) formed on an aggregate (8), a drain line (6) for conducting the collected condensed water (10) and a heat exchanger (3) through which the condensed water (10) can flow, **characterized in that** the heat exchanger (3) is designed as an air-water heat exchanger in which the condensed water (10) can receive heat from an air flow (20).

2. Cooling system (1) of claim 1, **characterized in that** the air-water heat exchanger (3) is configured such that an air flow (20) directed into the vehicle interior (5) can flow over and/or through the same.

3. Cooling system (1) of one of claims 1 or 2, **characterized in that** the air-water heat exchanger (3) is arranged in the air flow (20) upstream of an air conditioner.

4. Cooling system (1) of one of the preceding claims, **characterized in that** the air-water heat exchanger (3) is arranged inside the vehicle interior (5).

5. Cooling system (1) of one of the preceding claims, **characterized in that** the air-water heat exchanger (3) is arranged in a vehicle interior component, in particular in a steering wheel or a passenger seat.

6. Cooling system (1) of one of the preceding claims, **characterized in that** the air-water heat exchanger (3) can be bypassed by the condensed water (10).

7. Cooling system (1) of one of the preceding claims, **characterized in that** the cooling system (1) has a storage tank (4) for storing the condensed water (10).

8. Cooling system (1) of claim 7, **characterized in that** the storage tank (4) is arranged upstream of the air-water heat exchanger (3).

9. Cooling system (1) of one of claims 7 or 8, **characterized in that** the storage tank (4) can be bypassed by the condensed water (10).

10. Cooling system (1) of one of claims 7 to 9, **characterized in that** the storage tank (4) can be filled from outside.

11. Cooling system (1) of one of the preceding claims, **characterized in that** the aggregate (8) for conducting the condensed water (10) formed comprises at least one guide rib.

12. Cooling system (1) of one of the preceding claims, **characterized in that** the aggregate (8) is an evaporator and/or air cooler.

13. Method for using a condensed water (10) formed on an aggregate (8) of a vehicle, **characterized in that** for cooling a vehicle interior (5) and/or a vehicle interior component (5a), the condensed water (10) is collected at the aggregate (8) in a collecting container (2) and the collected condensed water (10) is fed to an air-water heat exchanger (3).

14. Method of claim 13, **characterized in that** the condensed water (10) is injected into an air flow (20).

15. Method of one of claims 13 or 14, **characterized in that** the condensed water (10) is fed to a storage tank (4) in which the condensed water (10) can be collected and/or stored.

## Revendications

1. Système de refroidissement (1) pour véhicules automobiles pour le refroidissement d'un habitacle (5) et/ou un agrégat de véhicule (5a) comportant au moins un récipient collecteur (2) pour collecter l'eau de condensation (10) provenant d'un agrégat (8), une conduite de vidange (6) pour conduire l'eau de condensation collectée (10) et un échangeur de chaleur (3) pouvant être passé par l'eau de condensation (10), **caractérisé en ce que** l'échangeur de chaleur (3) est conçu comme un échangeur de chaleur air-eau dans lequel l'eau de condensation (10) peut recevoir la chaleur d'un flux d'air (20).

2. Système de refroidissement (1) selon la revendication 1, **caractérisé en ce qu'**un flux d'air (20) dirigé vers l'intérieur du véhicule (5) peut passer au-dessus et/ou à travers l'échangeur de chaleur air-eau (3).

3. Système de refroidissement (1) selon l'une des revendications 1 ou 2, **caractérisé en ce que** l'échangeur de chaleur air-eau (3) est disposé dans le flux d'air (20) en amont d'un climatiseur.

4. Système de refroidissement (1) selon l'une quelconque des revendications précédentes, **caractérisé en ce que** l'échangeur de chaleur air-eau (3) est disposé à l'intérieur de l'habitacle (5).

5. Système de refroidissement (1) selon l'une quelconque des revendications précédentes, **caractérisé en ce que** l'échangeur de chaleur air-eau (3) est disposé dans un élément dudit habitacle du véhicule, notamment dans un volant ou un siège passager.

6. Système de refroidissement (1) selon l'une quelconque des revendications précédentes, **caractérisé en ce que** l'échangeur de chaleur air-eau (3) peut être contourné par l'eau condensée (10).

7. Système de refroidissement (1) selon l'une quelconque des revendications précédentes, **caractérisé en ce que** le système de refroidissement (1) comprend un réservoir (4) pour stocker l'eau de condensation (10).

8. Système de refroidissement (1) selon la revendication 7, **caractérisé en ce que** le réservoir (4) est disposé en amont de l'échangeur de chaleur air-eau (3).

9. Système de refroidissement (1) selon l'une des revendications 7 ou 8, **caractérisé en ce que** le réservoir (4) peut être contourné par l'eau de condensation (10).

10. Système de refroidissement (1) selon l'une des revendications 7 à 9, **caractérisé en ce que** le réservoir (4) peut être remplie de l'extérieur.

11. Système de refroidissement (1) selon l'une quelconque des revendications précédentes, **caractérisé en ce que** l'agrégat (8) comprend au moins une nervure de guidage pour conduire l'eau de condensation (10) formée.

12. Système de refroidissement (1) selon l'une quelconque des revendications précédentes, **caractérisé en ce que** l'agrégat (8) est un évaporateur et/ou un refroidisseur d'air.

13. Procédé d'utilisation de l'eau de condensation (10) formé sur un agrégat (8) d'un véhicule, **caractérisé en ce que** pour refroidir un habitacle de véhicule (5) et/ou un composant de l'habitacle de véhicule (5a), l'eau de condensation (10) est collectée sur l'agrégat (8) dans un récipient collecteur (2) et l'eau de condensation collectée (10) est introduite dans un échangeur de chaleur air-eau (3).

14. Procédé selon la revendication 13, **caractérisé en ce que** l'eau de condensation (10) est injectée dans un courant d'air (20).

15. Procédé selon l'une des revendications 13 ou 14, **caractérisé en ce que** l'eau de condensation (10) est acheminée vers un réservoir (4) dans lequel l'eau de condensation (10) peut être collectée et/ou stockée.
